# EUROPEAN PATENT APPLICATION

(11) **EP 1 519 602 A1**
(43) Date of publication of application: **30.03.2005**
(21) Application number: 02741363.2
(22) Date of filing: 28.06.2002
(51) Int. Cl.: H04Q 7/38

(54) **RADIO COMMUNICATION APPARATUS AND COMMON CONTROL CHANNEL RECEPTION METHOD**

(71) Applicant: MITSUBISHI DENKI KABUSHIKI KAISHA, Tokyo 100-8310 (JP)
(72) Inventor: KUBO, Yoshihiro, c/o Mitsubishi Denki K.K., Tokyo 100-8310 (JP)
(74) Representative: Popp, Eugen, Dr.
(86) International application number: PCT/JP2002/006593
(87) International publication number: WO 2004/004401

(57) **Abstract**

A radio communication apparatus includes: a transmitting section for transmitting a request message to a first cell and a second cell; a first combiner for demodulating a first common control channel transmitted from the first cell; a second combiner for demodulating a second common control channel transmitted from the second cell; a baseband controller for starting the first and second combiners, and for controlling the combiners into a state in which the combiners can demodulate the first and second common control channels simultaneously; and a radio communication controller for receiving a response message to the request message contained in one of the first and second common control channels. The radio communication apparatus can receive the response message contained in the common control channels positively even in a handover area where cell switching can occur frequently, and can improve the stability of the communication.

## Description

### TECHNICAL FIELD

The present invention relates to a mobile station in a CDMA communication system, and more particularly to a receiving method of a common control channel in a handover area.

### BACKGROUND ART

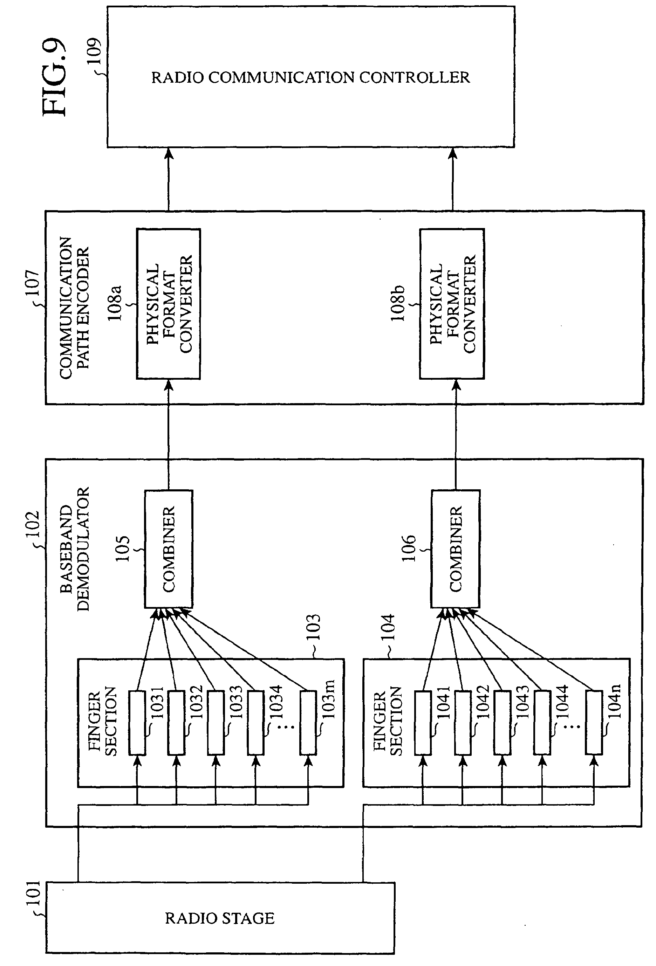

A conventional mobile station (radio communication apparatus) receives a physical channel SCCPCH, a common control channel a base station transmits, via a single radio link (Radio Link, RL), as specified by Max no of S-CCPCH RL (= 1) described in 3GPP (3rd Generation Partnership Project) TS25.331 10.3.3.27 Physical channel capability. Fig. 9 is a block diagram showing a receiving section of such a mobile station.

In Fig. 9, the reference numeral 101 designates a radio stage for receiving a high frequency signal from a base station, and for converting it to a digital signal; and 102 designates a baseband demodulator for demodulating the digital signal from the radio stage 101. The baseband demodulator 102 includes finger sections 103 and 104 each for despreading the digital signal from the radio stage 101 with respect to each receiving path from the base station, and combiners 105 and 106 for rake combining the signal despread for each receiving path. The finger sections 103 and 104 have a plurality of fingers 1031, 1032, ..., 103m and 1041, 1042, ..., 104n, respectively, each provided for one of the receiving paths, where m and n are integers. The finger section 103 and the combiner 105 are used for demodulating a physical channel (PCCPCH) including broadcast information, and the finger section 104 and the combiner 106 are used for demodulating a common control channel (SCCPCH) or dedicated channel (DPCH) including control information or data. The combiners 105 and 106 each have parameters set in accordance with the frame structure of the channel to be demodulated. As for the dedicated channel, since a plurality of base stations that communicate with the mobile station transmit the same signal, the single combiner 106 can demodulate the dedicated channel from the plurality of base station. As for the common control channel, on the other hand, since the individual base stations transmit their own data which differ from each other, the mobile station can receive the common control channel only from the single cell. The reference numeral 107 designates a communication path encoder connected to the baseband demodulator 102. The communication path encoder includes physical format converters 108a and 108b for converting the physical formats of the signals demodulated by the combiners 105 and 106, respectively. The reference numeral 109 designates a radio communication controller for accepting the signals from the communication path encoder to receive the broadcast information, control information and data, and for controlling the baseband demodulator 102.

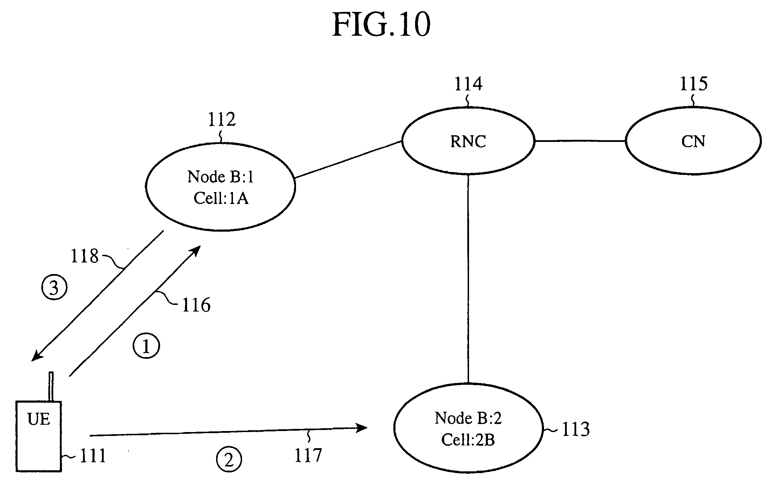

Next, referring to Fig. 10, a control procedure will be described of the conventional mobile station when it carries out communication in a handover area via the common control channel. Fig. 10 is a schematic diagram showing a configuration of a communication network including the conventional mobile station (UE). In Fig. 10, the reference numeral 111 designates the mobile station; reference numerals 112 and 113 each designate a base station (Node B) for making communication with the mobile station 111; the reference numeral 114 designates a radio network controller (RNC) for controlling the base stations 112 and 113; and 115 designates a core network (CN) for carrying out the call control, service control and the like of the entire communication system. The base station 112 manages the cell 1A, and the base station 113 manages the cell 2B. Reference numerals 116, 117 and 118 each designate a signal flow of the common control channel communicated between the mobile station 111 and the base stations 112 and 113: the reference numeral 116 designates a signal from the mobile station 111 to the base station 112, 117 designates a signal from the mobile station 111 to the base station 113, and 118 designates a signal from the base station 112 to the mobile station 111.

First, the mobile station 111 sends a reconnection request message as the signal 116 to the cell 1A (that is, the base station 112) during communication because of degradation in communication quality or the like. In this case, in the baseband demodulator 102, the combiner 106 has the parameters set for the common control channel to be sent from the cell 1A, and is activated in such a manner that the combiner 106 can demodulate the common control channel from the cell 1A. Here, consider the case where the mobile station 111 carries out cell switching from the cell 1A to the cell 2B before the cell 1A transmits a response message to the reconnection request message to the cell 1A, which can occur when the receiving level of the mobile station varies or its physical movement between the cells takes place. In this case, the mobile station 111 transmits to the cell 2B (the base station 113) the same reconnection request message as that transmitted to the cell 1A as the signal 117, and terminates the combiner 106 in the baseband demodulator 102 once. Then, having the parameters set for the common control channel from the cell 2B, the combiner 106 is restarted in a state it can demodulate the common control channel from the cell 2B.

As for the response to the request message such as the reconnection request message from the network side, it can sometimes be transmitted with a large delay because of the processing load of the network. The conventional mobile station is controlled as described above. Accordingly, even if the response from the cell 1A is transmitted at last as the signal 118 after the cell switching from the cell 1A to the cell 2B, the mobile station cannot receive the response message because it can receive only the common control channel from the single cell (cell 2B in this case) as described above. As is often the case in the handover area, if the mobile station carries out the cell switching further from the cell 2B to another cell before the cell 2B transmits a response message, the mobile station cannot receive the response message from the cell 2B transmitted with a delay because the same control is carried out. Repetition of such operation will bring about a timeout because a predetermined time period has elapsed without receiving any response to the request message, thereby causing a communication problem such as call disconnection.

Thus, the conventional mobile station rather easily cause a communication problem such as a call disconnection if the response to the request message via the common control channel is delayed because of the processing delay on the network side, thereby offering a problem of bringing about unstable communication.

### DISCLOSURE OF THE INVENTION

Therefore it is an object of the present invention to provide a radio communication apparatus and receiving method of a common control channel capable-of receiving the response message through the common control channel regardless of the processing delay on the network side.

According to a first aspect of the present invention, there is provided a radio communication apparatus comprising: a transmitting section for transmitting a request message to a first cell and a second cell; a first combiner for demodulating a first common control channel transmitted from the first cell; a second combiner for demodulating a second common control channel transmitted from the second cell; a baseband controller for starting the first combiner and the second combiner, and for controlling the combiners into a state in which the combiners can demodulate the first common control channel and the second common control channel simultaneously; and a radio communication controller for receiving a response message to the request message contained in one of the first common control channel and the second common control channel. Here, the baseband controller may start both the first combiner and the second combiner, when the radio communication controller issues instructions to make cell switching before receiving the response message from the first cell.

This configuration makes it possible to receive the response message contained in the common control channel positively even in a handover area in which the cell switching can occur frequently, thereby enabling the improvement of the stability of the communication.

The request message may be a message that requests reconnection of a dedicated channel, and the response message may be a message that specifies a dedicated channel to be reconnected. Thus, it can increase the success rate of the reconnection of the dedicated-channel, thereby implementing the stability of the communication.

The request message may be a message that requests switching from a dedicated channel to the common control channel, and the response message may be a message that permits the switching from the dedicated channel to the common control channel. Thus, it can improve the success rate of the switching from the dedicated channel to the common control channel, thereby implementing the stability of the communication.

The request message may be a message that requests cell reselection for making cell switching during communication via the common control channel, and the response message may be a message that enables the cell reselection. Thus, it can increase the success rate of the cell reselection, thereby implementing the stability of the communication.

According to a second aspect of the present invention, there is provided a radio communication apparatus comprising: a transmitting section for transmitting a request message to a first cell and a second cell; a first combiner that is set in a timeshared manner that enables the first combiner to demodulate one of a first common control channel and a physical channel containing broadcast information, which channels are transmitted from the first cell; a second combiner that is set in a manner that enables the second combiner to demodulate a second common control channel transmitted from the second cell; a baseband controller for setting the first combiner and the second combiner, and for controlling the combiners into a state in which the combiners can demodulate the first common control channel and the second common control channel simultaneously; and a radio communication controller for receiving a response message to the request message, which response message is contained in one of the first common control channel and the second common control channel. Here, the baseband controller may control into the state in which the first common control channel and the second common control channel can be demodulated simultaneously, when the radio communication controller issues instructions to make cell switching before receiving the response message from the first cell. In addition, the baseband controller may set the first combiner in a state that the first combiner can demodulate the physical channel including the broadcast information, when receiving the physical channel containing the broadcast information and the first common control channel simultaneously.

This configuration makes it possible to receive the response message contained in the common control channel positively without increasing the number of combiners even in a handover area in which the cell switching can occur frequently, thereby preventing upsizing of the circuit and enabling the improvement of the stability of the communication.

The request message may be a message that requests reconnection of a dedicated channel, and the response message may be a message that specifies a dedicated channel to be reconnected. Thus, it can increase the success rate of the reconnection of the dedicated channel, thereby implementing the stability of the communication.

The request message may be a message that requests switching from a dedicated channel to the common control channel, and the response message may be a message that permits the switching from the dedicated channel to the common control channel. Thus, it can improve the success rate of the switching from the dedicated channel to the common control channel, thereby implementing the stability of the communication.

The request message may be a message that requests cell reselection for making cell switching during communication via the common control channel, and the response message may be a message that enables the cell reselection. Thus, it can increase the success rate of the cell reselection, thereby implementing the stability of the communication.

According to a third aspect of the present invention, there is provided a receiving method of a common control channel comprising: a first step of setting a first combiner such that the first combiner can demodulate a first common control channel transmitted from a first cell; a second step of transmitting a request message to the first cell; a third step of switching a cell that carries out communication from the first cell to a second cell; a fourth step of setting a second combiner such that the second combiner can demodulate a second common control channel transmitted from the second cell; a fifth step of transmitting a request message to the second cell; and a sixth step of activating the first combiner and the second combiner to receive the response message contained in one of the first and second common control channels, when the third step is carried out before the response message to the request message is received from the first cell after the second step.

This makes it possible to receive the response message contained in the common control channel positively even in a handover area in which the cell switching can occur frequently, thereby enabling the improvement of the stability of the communication.

### BRIEF DESCRIPTION OF THE DRAWINGS

Fig. 1 is a functional block diagram showing a radio communication apparatus of an embodiment in accordance with the present invention;
Fig. 2 is a block diagram showing a detailed configuration of a receiving section of an embodiment 1 in accordance with the present invention;
Fig. 3 is a block diagram showing a configuration of a communication network including the radio communication apparatus in accordance with the present invention;
Fig. 4 is a flowchart illustrating the control of the radio communication controller of the embodiment 1 in accordance with the present invention;
Fig. 5 is a flowchart illustrating the control of the radio communication controller of the embodiment 1 in accordance with the present invention;
Fig. 6 is a flowchart illustrating the control of the baseband controller of the embodiment 1 in accordance with the present invention;
Fig. 7 is a flowchart illustrating the control of the baseband controller of the embodiment 1 in accordance with the present invention;
Fig. 8 is a block diagram showing a detailed configuration of a receiving section of an embodiment 2 in accordance with the present invention;
Fig. 9 is a block diagram showing a detailed configuration of a receiving section of a conventional radio communication apparatus; and
Fig. 10 is a diagram showing a communication network including the conventional radio communication apparatus.

### BEST MODE FOR CARRYING OUT THE INVENTION

The best mode for carrying out the invention will now be described with reference to the accompanying drawings to explain the present invention in more detail.

### EMBODIMENT 1

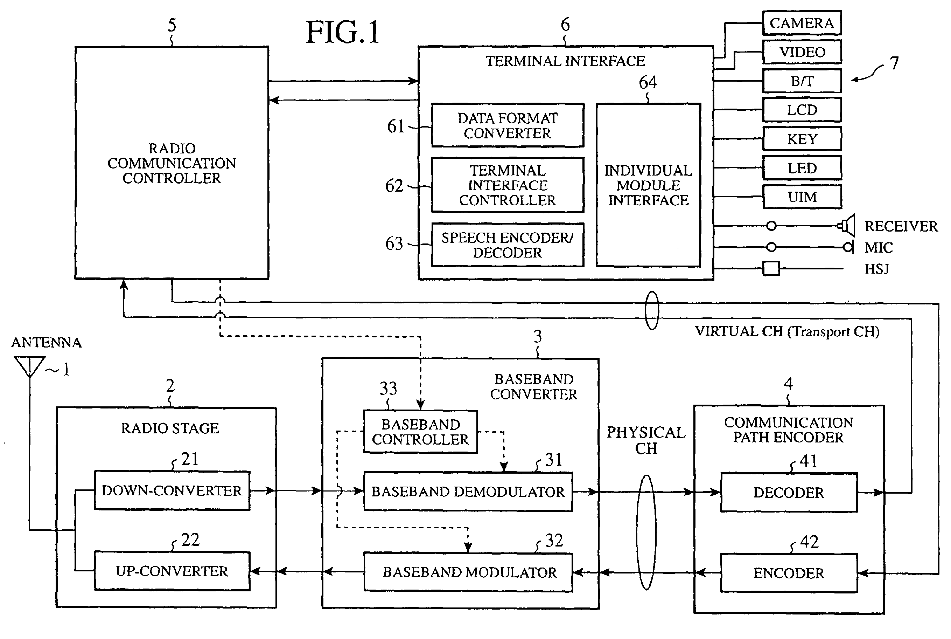

The embodiment 1 in accordance with the present invention will be described. Fig. 1 is a functional block diagram showing a radio communication apparatus (mobile station) of the embodiment 1 in accordance with the present invention. In Fig. 1, the reference numeral 1 designates an antenna for transmitting and receiving a high frequency signal to and from the base station; and 2 designates a radio stage including a down-converter 21 and an up-converter 22. The down-converter 21 down-converts the high frequency signal received from the base station, and outputs a digital signal. The up-converter 22 up-converts a modulated digital signal to a high frequency band.

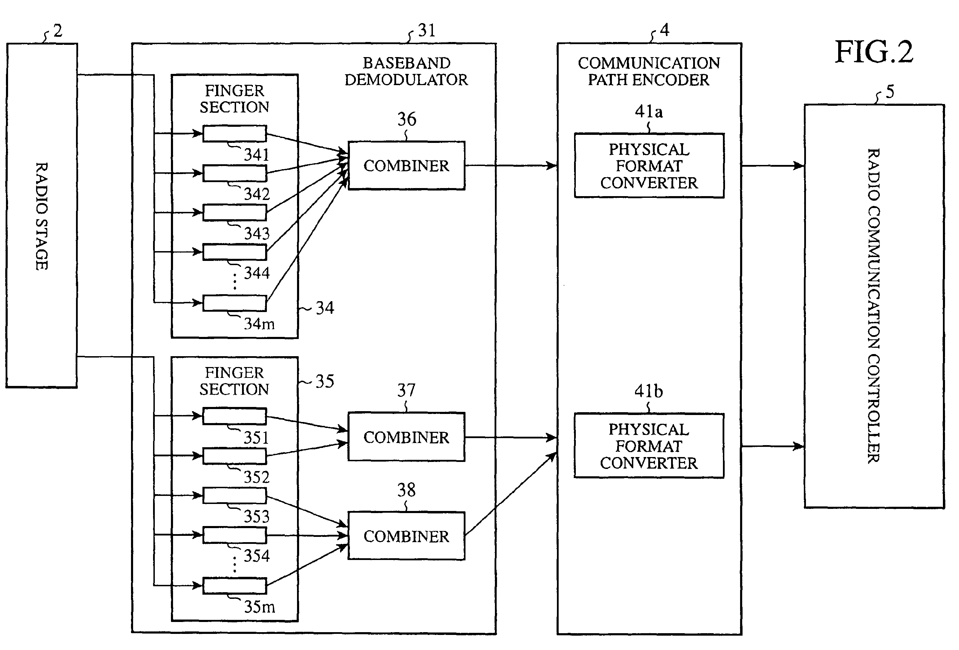

The reference numeral 3 designates a baseband modulator-demodulator including a baseband demodulator 31 for carrying out baseband demodulation, a baseband modulator 32 for carrying out baseband modulation, and a baseband controller 33 for controlling them in accordance with the control from a radio communication controller 5. The baseband controller 33 has a memory for storing the finally used combiner, which will be describedlater. The baseband demodulator 31 has a configuration for implementing the characteristics of the present invention, the details of which will be described with reference to Fig. 2.

The reference numeral 4 designates a communication path encoder including a decoder 41 and an encoder 42. A radio communication controller 5 carries out protocol control for radio communication, controls the radio stage 2,-baseband modulator-demodulator 3 and communication path encoder 4, and communicates with a terminal interface 6. The terminal interface 6 has interface functions with user interface modules 7 such as a camera, video recorder, LCD and operating panel, and includes a data format converter 61, terminal interface controller 62, speech encoder/decoder 63, and individual module interface 64.

Next, referring to Fig. 2, a detailed configuration of the baseband demodulator 31 having a major function for implementing the present invention will be described. In Fig. 2, the same reference numerals designate the same components as those of Fig. 1. In Fig. 2, the baseband demodulator 31 includes finger sections 34 and 35 each for despreading the digital signal fed from the radio stage 2 for each receiving path from the base station, and combiners 36, 37 and 38 for rake combining the signals despread for respective receiving paths. The finger sections 34 and 35 include a plurality of fingers 341, 342, ..., 34m and 351, 352, ..., 35n provided for the individual receiving paths, where m and n are integers. The finger section 34 and combiner 36 are used for demodulating a physical channel (PCCPCH) including broadcast information. Among the finger section 35, the fingers 351 and 352 are connected to the combiner 37, and the fingers 353, 354, ..., 35n are connected to the combiner 38. The assignment of the fingers, however, is not fixed, but is variable in accordance with the number of the receiving paths and the levels of the individual cells so that the fingers connected to the individual combiners 37 and 38 are dynamically changed. This control is carried out by the baseband controller. Both the combiners 37 and 38 are used for demodulating the common control channel (SCCPCH) or dedicated channel (DPCH). In addition, the baseband controller 33 sets the parameters of the combiners 36, 37 and 38 in accordance with the frame structure of the channels to be demodulated. The communication path encoder 4 includes physical format converters 41a and 41b for converting thephysical format of the signals demodulated by the combiners 36, 37 and 38.

For the primary common control channel, which is a physical channel transmitted from the base station to users in common, is used for transmitting broadcast information, the combiner 36 operates dedicatedly to enable reception of the system information, cell information and the like. The secondary common control channel (SCCPCH), which is a physical channel transmitted from the base station to users in common, is used for transmitting control information and short packets. The dedicated channel (DPCH), which is a physical channel assigned to each user, is used for transmitting data such as speech, packets and the like. The common control channel and the dedicated channel are not received simultaneously. As for the dedicated channel (DPCH), the same signal is transmitted through it from a plurality of base stations with which the mobile station can communicate. On the other hand, the secondary common control channel (SCCPCH) differs from cell to cell, and the parameters to be set to the combiners also differ from cell to cell. According to the present configuration, since the two combiners 37 and 38 can simultaneously demodulate two common control channels containing the data proper to the individual cells, the mobile station can wait for receiving common control channels simultaneously from the two cells.

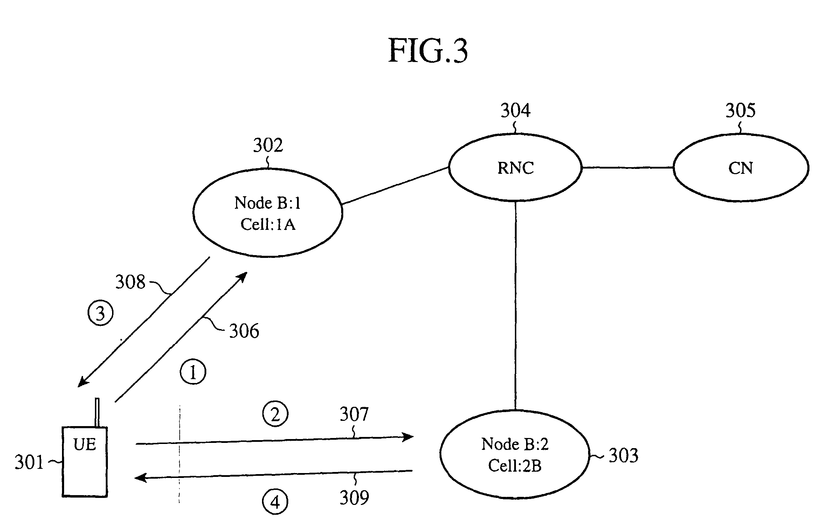

An example of the operation of the mobile station with the foregoing configuration will now be described. Fig. 3 is a block diagram showing a configuration of a communication network, which illustrates a signal flow when the mobile station in communication makes a reconnection request. In Fig. 3, the reference numeral 301 designates the mobile station (UE), reference numerals 302 and 303 each designate a base station (Node B) that communicates with the mobile station 301, the reference numeral 304 designates a radio network controller (RNC) for controlling the base stations 302 and 303; and the reference numeral 305 designates a core network (CN) for carrying out the call control, service control and the like of the entire communication system. The base station 302 manages the cell 1A, and the base station 303 manages the cell 2B. Reference numerals 306, 307, 308 and 309 designate signal flows of the common control channel communicated between the mobile station 301 and the base stations 302 and 303: the reference numeral 306 designates the signal from the mobile station 301 to the base station 302; 307 designates the signal from the mobile station 301 to the base station 303; 308 designates the signal from the base station 302 to the mobile station 301; and 309 designates the signal from the base station 303 to the mobile station 301.

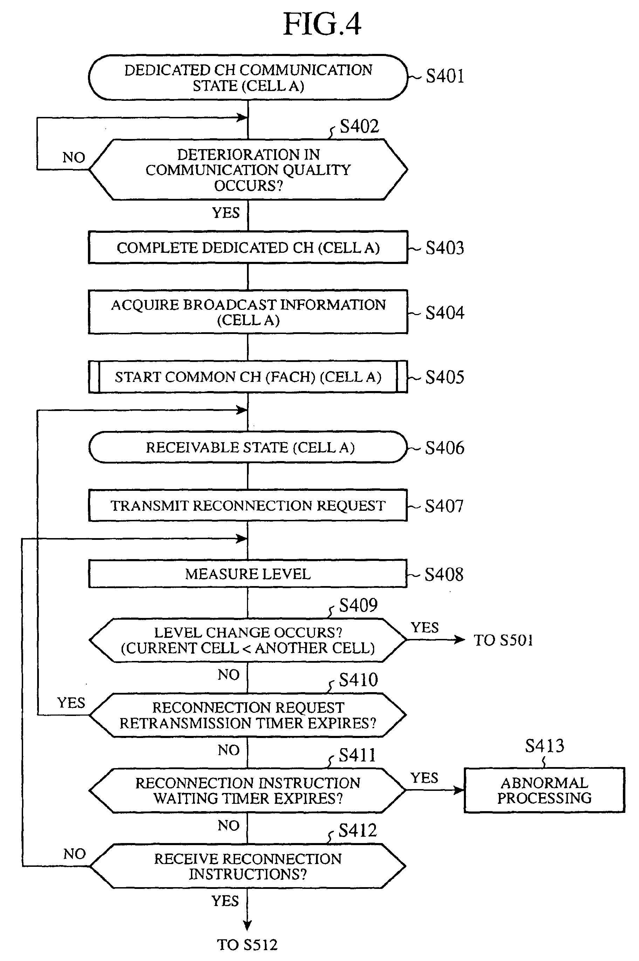

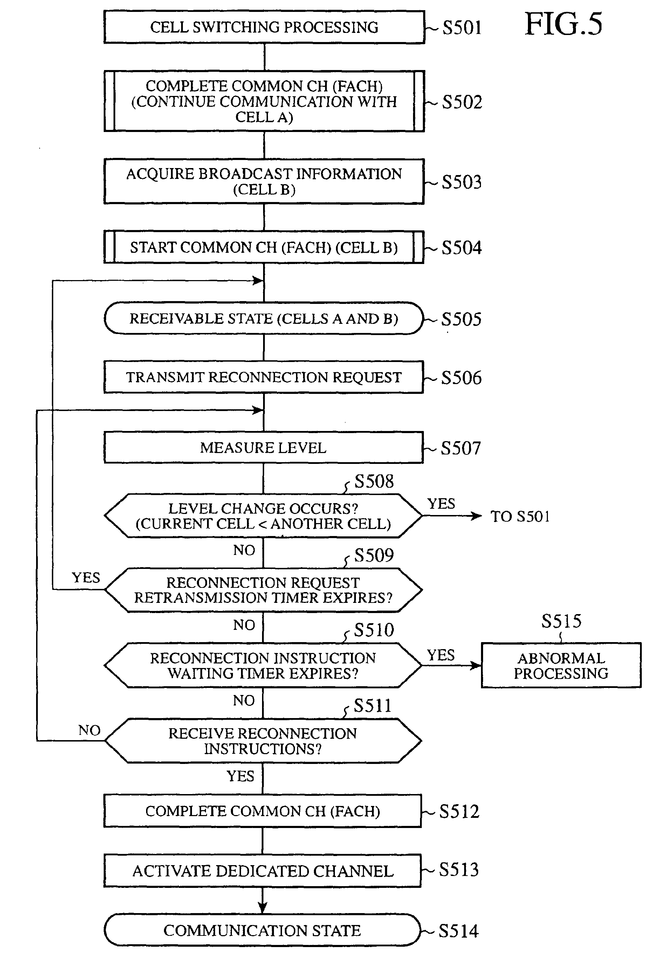

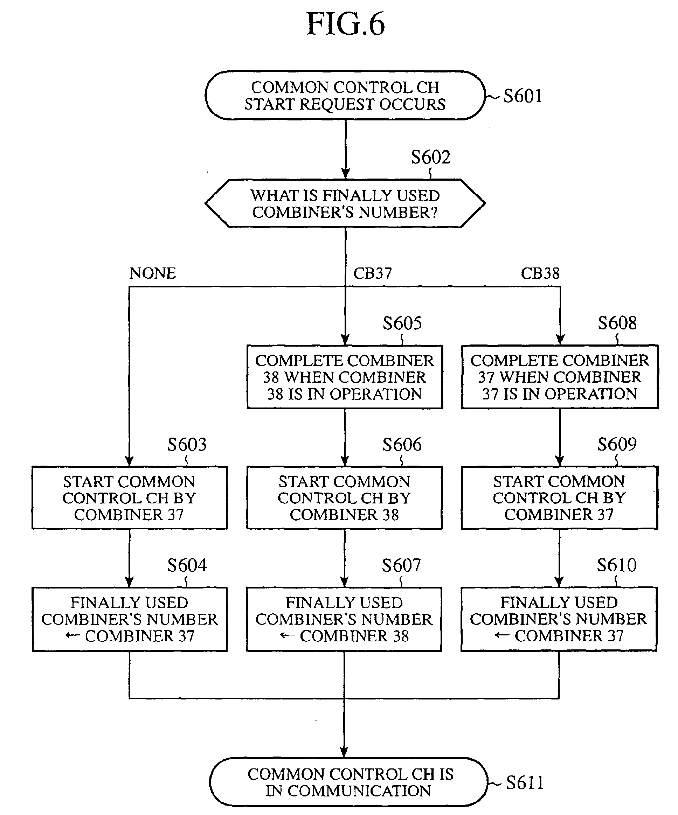

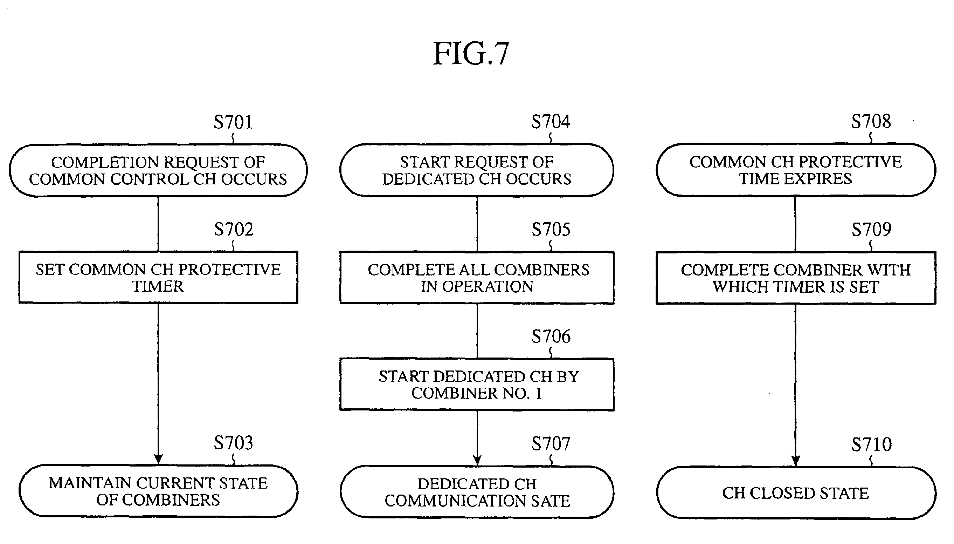

Figs. 4-7 are flowcharts illustrating a control procedure carried out when the mobile station 301 makes a reconnection request in the communication network of Fig. 3. Figs. 4 and 5 mainly illustrate the control procedure of the radio communication controller 5 of the mobile station 301, and Figs. 6 and 7 illustrate the control procedure of the baseband controller 33 corresponding to the control of the radio communication controller 5.

In Fig. 4, the mobile station 301 is in a communication state with the cell 1A of the base station 302 via the dedicated channel (step S401). At step S402 if the communication quality deteriorates, the radio communication controller 5 of the mobile station 301 instructs the baseband controller 33 to complete the dedicated channel, that is, to stop the combiners 37 and 38 operating for the dedicated channel (step S403), and to capture the broadcast information of the cell 1A (step S404). In this case, the communication falls into an instantaneous interruption. In addition, the radio communication controller 5 instructs the baseband controller 33 to activate the common control channel, that is, to activate the combiner for the common control channel from the cell A (step S405).

When a start request of the common control channel at step S405 takes place at step S601 of Fig. 6, the baseband controller 33 decides at step S602 the latest combiner used as the common control channel among the combiners 37 and 38. Since the finally used combiner has not yet been memorized here, the baseband controller 33 proceeds to step S603 and activates the combiner 37 as the combiner for the common control channel of the cell 1A, and memorizes the combiner 37 as the finally used combiner (step S604). Thus, the common control channel of the cell 1A enters into a communication state (receivable state) (step S611).

Returning to Fig. 4, the mobile station 301 is now in the receivable state of the common control channel from the cell 1A by the foregoing control (step S406). At step S407, the mobile station 301 transmits to the cell 1A a request message,for requesting the reconnection of the dedicated channel as the signal 306. In this case, the radio communication controller 5 starts a reconnection request retransmission timer and a reconnection instruction waiting timer. In addition, it measures levels of signals from neighboring cells at step S408. As a result, when the radio communication controller 5 detects a level change in which the signal from another cell (cell 2B) exceeds the level of the signal from the serving cell 1A, it advances the step to the cell switching at step S501 (Fig. 5). At step S410, when the retransmission timer expires, the radio communication controller 5 returns to step S406, and transmits the reconnection request message again at step S407. At step S411, if the waiting timer expires before receiving the response message (signal 308) instructing the reconnection, the radio communication controller 5 makes a decision that a reconnection failure occurs, and carries out abnormal processing (step S413). If the radio communication controller 5 does not detect the level change at step S409, and receives at step S412 the response message (signal 308) instructing the reconnection from the cell 1A before the two timers expire at steps S410 and S411, it proceeds to step S512 (Fig. 5), and carries out connection processing to the dedicated channel through a processing procedure which will be described later, thereby restarting the communication. If the radio communication controller 5 does not receive the reconnection instruction at step S412, it returns the processing to step S408.

In Fig. 5, the control procedure will be described which is carried out for making cell switching when the level change is detected at step S409. When the cell switching is started at step S501, the radio communication controller 5 instructs the baseband controller 33 to complete the common control channel, that is, to stop the combiner operating for the common control channel of the cell 1A (step S502), and to acquire the broadcast information of the cell 2B (step S503). In addition, the radio communication controller 5 instructs to activate the combiner for the common control channel from the cell B (step S504).

If the completion request of the common control channel (cell 1A) at step S502 takes place at step S701 of Fig. 7, the baseband controller 33 sets a timer for protecting rather than completing the combiner 37 operating for the cell 1A step S702. The time period to be set to the timer is made longer than the maximum delay time of an expected response message. Then, the combiner 37 maintains the current state, that is, the receivable state of the common control channel from the cell 1A until the timer expires (step S703).

If the start request of the common control channel (cell 2B) at the foregoing step S504 takes place at step S601 of Fig. 6, the baseband controller 33 decides the finally used combiner at step S602. Since the combiner 37 is memorized as the finally used combiner as described above, the baseband controller 33 proceeds to step S605, at which it halts the combiner 38 if it is operating, and activates the combiner 38 anew as the common control channel for the cell 2B (step S606). Then, the baseband controller 33 memorizes the combiner 38 as the finally used combiner (step S607), and both the cells 1A and 2B become a common control channel communication state (step S611).

Returning to Fig. 5, the mobile station 301 is in the receivable state of both the common control channels from the cells 1A and 2B by the foregoing control (step S505). At step S506, the mobile station 301 transmits a request message requesting the reconnection of the dedicated channel to the target cell 2B for the cell switching as the signal 307. In this case, the radio communication controller 5 starts the reconnection request retransmission timer and the reconnection instruction waiting timer. At step S507, the radio communication controller 5 measures the levels of the signals from neighboring cells. If it detects the level change at which the signal level from another cell exceeds the level of the signal from the serving cell 2B as a result of detection, it further proceeds to the cell switching (step S501) and repeats the same control. If the retransmission timer expires at step S509, the radio communication controller 5 returns the processing to step S505, and transmits the reconnection request message at step S506 again. If the waiting timer expires before receiving the response message instructing the reconnection at step S510, the radio communication controller 5 makes a decision that a reconnection failure occurs, and carries out abnormal processing (step S515). If the radio communication controller 5 does not detect the level change at step S508, and receives at step S511 the delayed response message (reconnection instruction, signal 308) from the cell 1A or the response message (reconnection instruction, signal 309) from the cell 1B before the two timers expire at steps S509 and S510, the radio communication controller 5 instructs the baseband controller 33 to complete the common control channel (step S512) and to start the dedicated channel (step S513). Thus, the radio communication controller 5 completes the reconnection processing to the dedicated channel and restarts the communication (step S514). If the radio communication controller 5 does not receive the reconnection instruction at step S511, it returns the processing to step S507.

If the start request of the common control channel at step S504 takes place at step S601 of Fig. 6 in the case where the radio communication controller 5 detects the level change at step S508 and carries out the cell switching after returning to step S501, the baseband controller 33 decides the finally used combiner (step S602). Since the combiner 38 is memorized as the finally used combiner here, the baseband controller 33 proceeds to step S608, at which it halts the combiner 37 if it is operating, and activates the combiner 37 anew as the common control channel for the target cell (step S609). Then, the baseband controller 33 memorizes the combiner 37 as the finally used combiner (step S610), and both the cells 2B and target cell become a common control channel communication state (step S611).

If the completion request of the common control channels (of both the cells 1A and 2B) at step S512 takes place at step S701 of Fig. 7, the baseband controller 33 sets the timer for protecting rather than completing the serving combiners 37 and 38 at step S702 as in the foregoing step S502, and maintains the current state of the combiners 37 and 38 (step S703). On the other hand, if a start request of the dedicated channel at the foregoing step S513 occurs (step S704), the baseband controller 33 halts the serving combiners 37 and 38 (step S705), and activates the combiner 37 or 38 (or both of them) for the dedicated channel (step S706), thereby entering into the dedicated channel communication state (step S707).

In addition, when the common control channel protective timer expires in Fig. 7 (step S708), the baseband controller 33 halts the combiner that has set the timer, and enters into a channel-closed state at which the common control channel is not received (step S710). The time period to be set to the protective timer is made longer than the maximum delay time of the expected response message as described above. Accordingly, the channel-closed state in the control procedure is brought about when the communication is completed in a state other than the response message waiting state concerning the common control channel.

According to the foregoing control procedure, the mobile station can receive the common control channels from the two cells before and after the cell switching, even if the cell switching takes place before receiving the response message after transmitting the reconnection request. Thus, the mobile station can circumvent the problem of the communication interruption by receiving the response message from the cell that transmits the response first, even if the response message delays because of some cause on the network side. Consequently, the mobile station can continue stable communication even in a handover area in which the cell switching can easily occur.

In addition, such control is also possible in which the radio communication controller 5 starts the combiner 38 for the common control channel of the cell 2B with maintaining the combiner 37 in the receivable state of the common control channel of the cell 1A in the foregoing steps S502 and S504. The present embodiment 1 can be implemented by merely modifying the physical layer without changing from the conventional control the control of the radio communication controller 5, which is carried out in accordance with the higher level protocol. This makes it possible to facilitate the design of the mobile station.

Although the embodiment 1 is described by way of example of the control procedure during the reconnection request, a similar advantage can also be achieved in other control that needs the response message via the common control channel in the state inwhich the cell switching is easy to occur. For example, consider a case where the transmission volume decreases during the packet communication via the dedicated channel, and the switching of the communication is made to the common control channel. In this case, the mobile station must transmit a cell update signal to the cell in communication, and receive its response message via the common control channel. Thus, carrying out the same control as that of the embodiment 1 enables the mobile station to receive the delayed response message even in the handover area in which the cell switching is easy to occur, thereby being able to increase the success rate of the switching from the dedicated channel to the common control channel.

In addition, when the cell switching takes place during transmission of a short packet via the common control channel, the mobile station must transmit the cell update signal to the target cell of the switching, and receive the response message via the common control channel. In this case, if the cell switching occurs before receiving the response message, such a procedure will be repeated as the mobile station transmits the cell update signal to the next cell, and waits for the response message via the common control channel. In this case also, the success rate of reselecting the cell without any communication interruption is increased by receiving the response message from both the cells before and after the cell switching as in the embodiment 1.

### EMBODIMENT 2

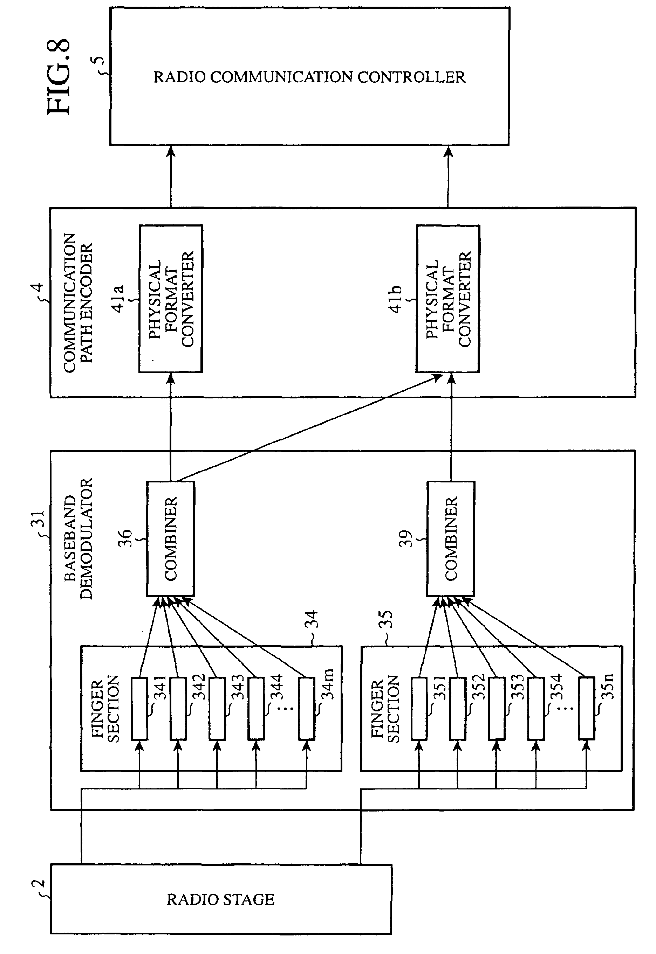

Next, an embodiment 2 in accordance with the present invention will be described. The functional block diagram of the radio communication apparatus (mobile station) of the present embodiment 2 is the same as that of Fig. 1. Referring to Fig. 8, a detailed arrangement of the baseband demodulator 31 with a characteristic configuration will be described. In Fig. 8, the same reference numerals designate the same components as those of Fig. 2. The baseband demodulator 31 includes the finger sections 34 and 35 each for despreading the digital signal fed from the radio stage 2 for each receiving path from the base station, and combiners 36 and 39 for rake combining the signals despread for respective receiving paths. The finger sections 34 and 35 include a plurality of fingers 341, 342, ..., 34m and 351, 352, ..., 35n provided for the individual receiving paths, where m and n are integers. The finger section 34 and combiner 36 are used for demodulating the physical channel (PCCPCH) including broadcast information or for demodulating the secondary common control channel (SCCPCH). The finger section 35 and combiner 39 are used for demodulating the secondary common control channel (SCCPCH) or dedicated channel (DPCH). In addition, the baseband controller 33 sets the parameters of the combiners 36 and 39 in accordance with the frame structure of the channels to be demodulated. The communication path encoder 4 includes the physical format converter 41a for converting the physical format of the signal including broadcast information demodulated by the combiner 36, the physical format converter 41b for converting the physical format of the common control channel demodulated by the combiner 36 and for converting the physical format of the common control channel or dedicated channel demodulated by the combiner 39.

The physical channel (PCCPCH) including the broadcast information transmits the system information, cell information and the like at a fixed rate. Although the broadcast information must always be placed in a receivable state, the information is not transmitted uninterruptedly. In view of this, as in the embodiment 1, when the cell switching occurs while waiting the response message via the common control channel, the baseband demodulator 31 halts the combiner 36 operating for the broadcast information, and restarts it as the combiner for the common control channel before the cell switching. In this case, the combiner 39 is activated as the combiner for the common control channel after the cell switching. Alternatively, it is possible to restart the combiner 36 as the combiner for the common control channel after the cell switching, and to start the combiner 39 as the combiner for the common control channel before the cell switching. Then, after receiving the response message with one of the combiners 36 and 39, the baseband demodulator 31 halts the two combiners immediately, and restarts the combiner 36 as the combiner for the broadcast information, and restarts the combiner 39 in accordance with the contents of the response message.

As for the systemhaving an occasion of receiving the physical channel including the broadcast information and the common control channel simultaneously (for example, 20 msec overlap at a period of every three seconds), it is necessary to control the combiner 36 in such a manner that the priority is assigned to receiving the broadcast information.

The foregoing control enables the combiners 36 and 39 to demodulate the two common control channels, which provide the data proper to the individual cells, simultaneously. Thus, the mobile station can receive the common control channels from the two cells before and after the cell switching. Accordingly, even if the response message is delayed because of some cause on the network side, the problem of the communication interruption can be avoided by receiving the response message from the cell that provides the response first. As a result, the mobile station can continue stable communication in a handover area in which the cell switching is likely to occur frequently.

Furthermore, using one of the combiners for both the broadcast information and common control channel by switching on a time sharing basis, the foregoing advantage can be achieved without increasing the number of the combiners. Even though the control is carried out in such a manner that the broadcast information is received first in the overlap section of the broadcast information and the common control channel, the foregoing advantage can be expected because the likeliness of receiving the response message at the overlap is low.

## Claims

1. A radio communication apparatus comprising:
a transmitting section for transmitting a request message to a first cell and a second cell;
a first combiner for demodulating a first common control channel transmitted from the first cell;
a second combiner for demodulating a second common control channel transmitted from the second cell;
a baseband controller for starting said first combiner and said second combiner, and for controlling said combiners into a state in which said combiners can demodulate the first common control channel and the second common control channel simultaneously; and
a radio communication controller for receiving a response message to the request message contained in one of the first common control channel and the second common control channel.

2. The radio communication apparatus according to claim 1, wherein said baseband controller starts both said first combiner and said second combiner, when said radio communication controller issues instructions to make cell switching before receiving the response message from the first cell.

3. The radio communication apparatus according to claim 1, wherein the request message is a message that requests reconnection of a dedicated channel, and the response message is a message that specifies a dedicated channel to be reconnected.

4. The radio communication apparatus according to claim 1, wherein the request message is a message that requests switching from a dedicated channel to the common control channel, and the response message is a message that permits the switching from the dedicated channel to the common control channel.

5. The radio communication apparatus according to claim 1, wherein the request message is a message that requests cell reselection for making cell switching during communication via the common control channel, and the response message is a message that enables the cell reselection.

6. A radio communication apparatus comprising:
a transmitting section for transmitting a request message to a first cell and a second cell;
a first combiner that is set in a timeshared manner that enables said first combiner to demodulate one of a secondary common control channel received from the first cell and a physical channel containing broadcast information, which channels are transmitted from the first cell;
a second combiner that is set in a manner that enables said second combiner to demodulate a secondary common control channel received from the second cell;
a baseband controller for setting said first combiner and said second combiner, and for controlling said combiners into a state in which said combiners can demodulate the secondary common control channel received from the first cell and the secondary common control channel received from the second cell simultaneously; and
a radio communication controller for receiving a response message to the request message, which response message is contained in one of the secondary common control channel received from the first cell and the secondary common control channel received from the second cell.

7. The radio communication apparatus according to claim 6, wherein said baseband controller controls into the state in which the secondary common control channel received from the first cell and the secondary common control channel received from the second cell can be demodulated simultaneously, when said radio communication controller issues instructions to make cell switching before receiving the response message from the first cell.

8. The radio communication apparatus according to claim 6, wherein said baseband controller sets said first combiner in a state that said first combiner can demodulate the physical channel including the broadcast information, when receiving the physical channel containing the broadcast information and the secondary common control channel received from the first cell simultaneously.

9. The radio communication apparatus according to claim 6, wherein the request message is a message that requests reconnection of a dedicated channel, and the response message is a message that specifies a dedicated channel to be reconnected.

10. The radio communication apparatus according to claim 6, wherein the request message is a message that requests switching from a dedicated channel to the common control channel, and the response message is a message that permits the switching from the dedicated channel to the common control channel.

11. The radio communication apparatus according to claim 6, wherein the request message is a message that requests cell reselection for making cell switching during communication via the common control channel, and the response message is a message that enables the cell reselection.

12. A receiving method of a common control channel comprising:
a first step of setting a first combiner such that said first combiner can demodulate a first common control channel transmitted from a first cell;
a second step of transmitting a request message to the first cell;
a third step of switching a cell that carries out communication from the first cell to a second cell;
a fourth step of setting a second combiner such that said second combiner can demodulate a second common control channel transmitted from the second cell;
a fifth step of transmitting a request message to the second cell; and
a sixth step of activating said first combiner and said second combiner to receive the response message contained in one of the first and second common control channels, when the third step is carried out before the response message to the request message is received from the first cell after the second step.
